# EUROPEAN PATENT APPLICATION

(11) **EP 4 799 881 A1**
(43) Date of publication of application: **02.09.2026**
(21) Application number: 26160237.9
(22) Date of filing: 24.02.2026
(51) Int. Cl.: B60T 7/20, B60T 8/18, B60T 8/24, B60T 8/36, B60T 13/22, B60T 15/04, B60T 15/18, B60T 15/22

(54) **CONTROL VALVE ASSEMBLY FOR A HYDRAULIC BRAKING SYSTEM OF A VEHICLE CONNECTED TO A TRAILER**

(30) Priority: 27.02.2025 IT 202500003948
(71) Applicant: Raicam Driveline S.R.L., 12084 Mondovi (CN) (IT)
(72) Inventor: ROSSI, Diego, I-12080 PIANFEI (Cuneo) (IT); CAREY, Sean, REDDITCH, B98 9PB8 (GB); BOULIVAN, Guillaume, HERTFORD, SG13 7HA (GB)
(74) Representative: Fioravanti, Corrado

(57) **Abstract**

A valve assembly (100) for a braking system of a vehicle connected to a trailer comprises a hydraulic control solenoid valve (1) and a hydraulic control valve (4), connectable to a pressure source (P) and to a reservoir (T) mounted on board the agricultural vehicle, and configured to receive a brake fluid from the pressure source (P), a hydraulic control line (CL) and a supplementary hydraulic control line (SL) that respectively connect the hydraulic control solenoid valve (1) and the hydraulic control valve (4) to at least one trailer brake. A hydraulic emergency solenoid valve (3) arranged on the supplementary control line (SL), interposed between the hydraulic control valve (4) and said at least one trailer brake, and connectable to the reservoir (T) in such a way that when activated, the pressure in the supplementary control line (SL) is reduced, activating said at least one trailer brake in an emergency braking.

## Description

### Technical field

The present invention relates to service braking and emergency braking of trailers of vehicles such as tractors, telescopic handlers, wheeled loaders, and the like.

### Background art

Typically, agricultural vehicles are equipped with a hydraulic braking system comprising a service brake for slowing down or stopping the vehicle during normal travel, and a parking brake for locking the vehicle during parking or when the vehicle is on sloped sections.

Agricultural vehicles are frequently connected to a trailer. In the prior art, agricultural vehicles or tractor units are known that are equipped with hydraulic braking systems that take pressure from the brake fluid in the braking system of the tractor unit to control the brakes of the trailer, however introducing a delay in the braking command of the trailer itself.

The braking of the trailer of agricultural vehicles and the like must comply with certain safety regulations, particularly with regard to the modulation of the braking applied to the trailer as a function of instantaneous data of speed and deceleration, as well as of the mass of the load transported by the trailer.

An electronic control unit, arranged on board the agricultural vehicle, detects these movement and load data and manages the modulation of the braking force transmitted to the trailer brakes. The regulation currently in force in the European Union is "COMMISSION DELEGATED REGULATION (EU) 2015/68".

In accordance with the regulations in force, in addition to normal service braking and parking braking, it is also necessary to manage emergency braking of the trailer, i.e. braking over reduced distances in the event of failure of the service brake.

The regulations require that agricultural vehicles be equipped with a dual-line hydraulic braking system, in which a first control line, also referred to as a "control line", is dedicated to service braking, and a second supplementary control line, also referred to as a "supplementary line", is dedicated to parking braking and emergency braking. Under normal operating conditions of the hydraulic braking system of the vehicle, a pressure usually between 15 and 35 bar is maintained in the supplementary control line, in order to keep the parking brake deactivated. In the event of failure of the control line, the hydraulic braking system automatically activates the supplementary control line, stopping the trailer.

In the prior art, braking systems for vehicles equipped with trailers are known.

Patent document US2018273014 A1 describes a hydraulic brake control system for vehicles with a trailer, comprising a control line and a supplementary line. The system comprises two solenoid valves, controlled by a controller and arranged for pressure modulation respectively in the control line and in the supplementary line.

Patent document GB2153468 A describes a hydraulic braking system of the trailer of a vehicle. A valve is arranged on the vehicle, configured to receive hydraulic pressure and to transmit the pressure to the trailer, keeping the brakes in a released position. Upon actuation of a brake pedal, the valve is configured to discharge the fluid toward a low-pressure reservoir. This pressure drop allows activation of the trailer brakes. An emergency valve allows discharge of the fluid to the reservoir in the event of failure of the main pressure line.

Patent document EP3814182 B1 describes a hydraulic braking system for a vehicle provided with a coupling. The vehicle comprises a hydraulic supply circuit and a hydraulic control circuit provided with a control valve and a valve control device. The coupling comprises a hydraulic braking circuit connected to the hydraulic supply circuit and to the hydraulic control circuit of the vehicle and also comprising a hydraulic accumulator, controllable by means of the control device for supplying braking pressure to braking means.

### Summary of the invention

A general object of the present invention is to provide a valve assembly capable of performing emergency braking.

Another object of the present invention is to provide a valve assembly capable of performing emergency braking without delays.

In summary, a control valve assembly for a braking system of a vehicle, in particular an agricultural vehicle, connected to a trailer comprises a hydraulic control solenoid valve and a hydraulic control valve, each hydraulically connectable to a pressure source and to a brake fluid reservoir mounted on board the agricultural vehicle, and each configured to receive a pressurized brake fluid from the pressure source. The valve assembly also comprises a hydraulic control line that hydraulically connects the hydraulic control solenoid valve to at least one trailer brake, and a supplementary hydraulic control line that hydraulically connects the hydraulic control valve to said at least one trailer brake. The valve assembly comprises a hydraulic emergency solenoid valve arranged on the supplementary control line, interposed between the hydraulic control valve and said at least one trailer brake. The hydraulic emergency solenoid valve is connectable to the reservoir in such a way that when the hydraulic emergency solenoid valve is activated, the pressure in the supplementary control line is reduced, activating said at least one trailer brake in an emergency braking.

According to a second aspect of the invention, a hydraulic braking system of a vehicle, in particular an agricultural vehicle, connected to a trailer comprises a valve assembly according to the first aspect of the invention, connectable to a pressure source and to a brake fluid reservoir mounted on board the agricultural vehicle, and arranged to control the braking of at least one trailer brake.

### Brief description of the drawings

The features and advantages of the present invention will become more clearly apparent from the following detailed description, given purely by way of non-limiting example with reference to the accompanying drawings, in which:
Figure 1 schematically illustrates a valve assembly in a normal vehicle travel condition,
Figure 2 schematically illustrates a valve assembly in a service braking condition,
Figure 3 schematically illustrates a valve assembly in a parking braking condition, and
Figure 4 schematically illustrates a valve assembly in an emergency braking condition.

### Detailed description

A hydraulic braking system 200 of an agricultural vehicle, for example a tractor, connected to a trailer comprises a control valve assembly 100 installable on board the agricultural vehicle and configured to control at least one trailer brake. The valve assembly 100 receives hydraulic pressure from a source P, for example a hydraulic pump, mounted or installed on board the towing or tractor agricultural vehicle, and is actuated by a first control, for example a pedal, of a service brake of the agricultural vehicle and by a second control, for example a lever or a button, of a parking brake of the agricultural vehicle. For example, the valve assembly 100 is supplied with a maximum pressure of about 150-160 bar.

The valve assembly 100 is configured to perform service braking, parking braking or emergency braking of the trailer as required.

The valve assembly 100 is associated with an electronic control unit arranged on board the agricultural vehicle, which receives information from the braking system of the trailer and activates it according to the driver's requests. The control unit receives activation information both from a service brake control and from a parking brake control.

Two control lines exit from the valve assembly 100, a first control line or control line CL at high pressure, for example 160 bar, suitable for operation of the braking system, and a second supplementary control line or supplementary line SL at low pressure, for example 20 bar, for controlling a parking brake and/or an emergency or rescue brake. In other words, the control line CL is arranged for service braking of the trailer during normal travel of the agricultural vehicle, and the supplementary control line SL is arranged for parking braking, for example during parking, and for emergency braking in the event of failure of the control line CL.

The high-pressure control line CL controls service braking of the trailer by modulating the braking between a minimum or zero pressure, at which no braking force is applied to the trailer brakes, and a maximum available pressure at which the maximum braking force is applied to at least one trailer brake.

The low-pressure supplementary control line SL controls parking braking of the trailer, when said at least one brake is activated by a driver of the vehicle by means of the corresponding control.

The low-pressure supplementary control line SL also controls emergency braking of the trailer, keeping said at least one brake normally deactivated by supplying a maximum pressure, for example 20 bar, and reducing the pressure to zero when said at least one emergency brake is activated.

For example, for trailers having multiple axles, service braking may act on the brakes of the wheels of all axles of the trailer, while parking braking and therefore emergency braking may act on the wheels of a single axle. For single-axle trailers, the trailer brake may be activated both by the control line CL as a service brake and by the supplementary control line SL as a parking brake or emergency brake.

The control line CL and the supplementary control line SL are hydraulically separated from each other. In other words, said at least one service brake and said at least one parking brake are hydraulically separated from each other, advantageously making it possible to use said at least one parking brake as an emergency brake when a failure occurs in the control line CL of the service brake.

During normal travel conditions of the agricultural vehicle with a trailer, the control line CL has zero pressure and the supplementary control line SL has a travel pressure between 20 bar and 30 bar, which keeps said at least one emergency brake deactivated.

According to the invention, when a malfunction of said at least one service brake of the trailer occurs, that is, of the control line CL, said at least one parking brake of the trailer is automatically activated and electronically controlled by means of the electronic control unit and the supplementary control line SL to generate an emergency braking.

The malfunction may be a failure of the control line CL, located between the control unit of the agricultural vehicle and the trailer brake. For example, it may be a failure of the control unit, of the electrical command of the control line CL, of the valve assembly 100, or any fluid leakage of the valve assembly 100 or of the braking system of the trailer. The electronic control unit, installed on board the agricultural vehicle, continuously also detects a pressure signal coming from one or more pressure sensors CLS, SLS mounted along the circuit of the braking system of the trailer, in particular along the control line CL and along the supplementary control line SL, and compares these data or information in real time with input data or information of the braking commanded by the driver. When the control unit detects a pressure that does not correspond to the pressure that should have been detected based on the braking command imparted by the driver, for example by means of a pedal command, it signals a failure and, according to the invention, automatically activates a hydraulic emergency or rescue solenoid valve 3 that modulates the pressure in the supplementary control line SL, activating said at least one emergency brake of the trailer.

As illustrated in the figures, along the control line CL, downstream of the hydraulic pump P, a hydraulic solenoid valve or control valve or control solenoid 1 is mounted, which receives an actuation command from the vehicle control unit following activation of the pedal of said at least one brake of the towing vehicle.

The hydraulic control solenoid valve 1 is connectable to the control unit and is configured to receive from it an electrical control signal via an electrical line 18, a configuration also known as brake-by-wire, for regulating the pressure in the control line CL.

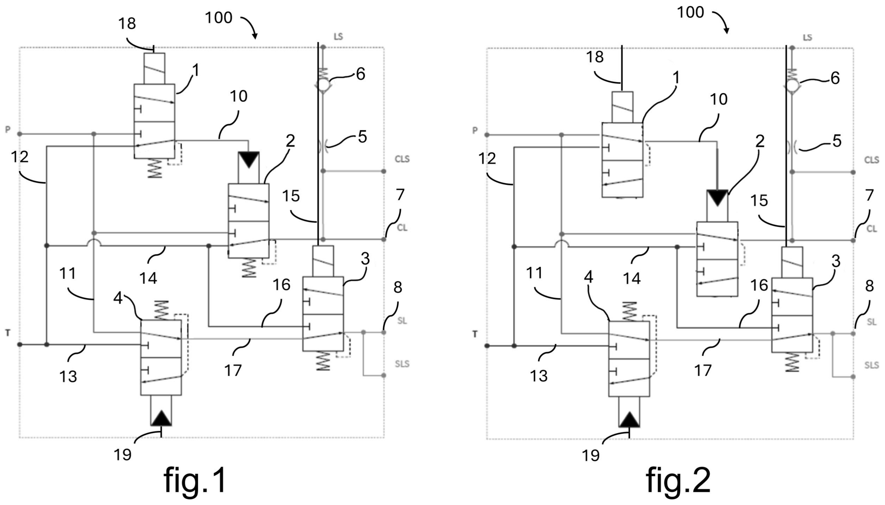

The hydraulic control solenoid valve 1, normally closed, prevents fluid communication between the hydraulic pump P and the outlet 7 of the control line CL, cancelling the pressure in the control line CL, allowing travel of the trailer and preventing service braking (figure 1).

When the hydraulic control solenoid valve 1 is activated, it is configured to place the hydraulic pump P in direct fluid communication with the outlet 7 of the control line CL, increasing and modulating the pressure in the control line CL and generating a service braking (figure 2) for the trailer.

Service braking is preferably modulated, according to an embodiment illustrated in figure 2, by means of a mechanical hydraulic modulation valve 2 or pilot valve, which is installed on the control line CL and is interposed between and hydraulically connected to the hydraulic control solenoid valve 1 and said at least one trailer brake. In particular, the modulation valve 2 may be connected between the hydraulic solenoid valve 1 and the outlet 7 of the control line CL toward said at least one trailer brake.

The normally closed mechanical hydraulic modulation valve 2, when activated by the pilot solenoid valve 1, is configured to perform a linear regulation of the pressure present in the control line CL.

The mechanical modulation valve 2 may be hydraulically controllable by the hydraulic control solenoid valve 1 so as to open against the force of an elastic element and proportionally open the flow passage in the control line CL toward the outlet 7 toward said at least one service brake.

A hydraulic control conduit 10 is provided to transmit a low-pressure signal by means of which the hydraulic control solenoid valve 1 controls and regulates the mechanical hydraulic modulation valve 2.

In an alternative and less preferred embodiment, the mechanical modulation valve 2 for service braking may be omitted, and the hydraulic control solenoid valve 1 may be configured and controlled to directly regulate the braking pressure at the outlet 7 of the control line CL.

In the embodiment in which the mechanical modulation valve 2 is not present, the hydraulic control solenoid valve 1 comprises an integrated modulator for modulating the pressure in the control line CL as a function of the command received from the brake pedal through an electrical command on the electrical line 18.

The hydraulic control solenoid valve 1 or the assembly comprising the hydraulic control solenoid valve 1 and the mechanical modulation valve 2 may have a modulatable high-pressure outlet for supplying to the outlet 7 of the control line CL a pressure adjustable between 0 bar and a maximum pressure, for example 160 bar.

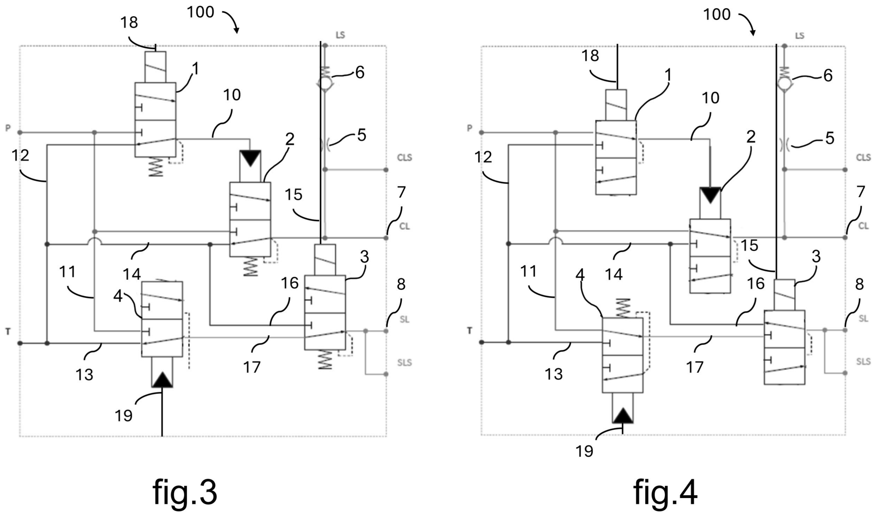

The supply line from the source P toward the outlet 7 of the control line CL also comprises a branch line 11 toward a hydraulic control valve 4 of the parking brake, which may be hydraulically controlled through a control line 19, as illustrated in figure 3.

In an alternative embodiment not illustrated in the figures, the hydraulic control valve 4 of the parking brake may be mechanically actuated.

The hydraulic control valve 4 may be arranged in parallel with the hydraulic control solenoid valve 1 and, when present, with the mechanical modulation valve 2.

The hydraulic control valve 4 is associated with an elastic element that normally keeps it open, allowing fluid communication between the hydraulic pump P and the outlet 8 of the supplementary control line SL, increasing the pressure in the supplementary control line SL and preventing braking (figures 1, 2 and 4). The hydraulic control valve 4 is structurally designed to regulate the maximum pressure of the hydraulic pump P, for example 150-160 bar, to maximum pressure values suitable for the supplementary control line SL, for example 20-30 bar.

A brake fluid reservoir T mounted on board the agricultural vehicle is configured to receive the brake fluid discharged directly from the hydraulic control solenoid valve 1 through a line 12, directly from the hydraulic control valve 4 through a line 13, directly from the hydraulic emergency solenoid valve 3 through lines 14 and 16, and, when present, directly from the mechanical modulation valve 2 through a line 14.

When the hydraulic control valve 4 is actuated (figure 3) by means of a control line 19, the fluid communication between the hydraulic pump P and said at least one trailer brake is interrupted, and said at least one brake is connected to the reservoir T by means of the supplementary control line SL, reducing the pressure in the supplementary control line SL and activating said at least one brake to generate a parking braking.

The valve assembly 100 also comprises a hydraulic emergency or rescue solenoid valve 3 electrically controlled by the electronic control unit via an electrical line 15.

The hydraulic emergency solenoid valve 3 is arranged upstream of the outlet 8 of the supplementary control line SL toward said at least one brake, and is interposed between and hydraulically connected to the hydraulic control valve 4 of the parking brake by means of a line 17 and said at least one trailer brake. The hydraulic emergency solenoid valve 3 is connectable in parallel in discharge with the reservoir T through a line 16 that joins the discharge line 14.

In the absence of failures, during travel of the agricultural vehicle (figure 1), service braking (figure 2) and parking braking (figure 3), the hydraulic emergency solenoid valve 3, normally closed, is not actuated, connecting the supplementary control line SL with the hydraulic control valve 4.

When actuated, the solenoid valve 3 is configured to place the supplementary control line SL in fluid communication with the reservoir T (figure 4), reducing the pressure in the supplementary control line SL and activating said at least one brake in an emergency braking.

In the figures, reference numeral 6 indicates a non-return valve, reference numeral 5 indicates a flow throttling valve, and LS indicates an outlet of the valve assembly 100 configured to communicate with the control unit by sending pressure information relating to an ongoing braking so that the control unit can command an exit from a possible stand-by state and increase the supply pressure at the source P to a nominal level, for example 150-160 bar.

The valve assembly 100 may comprise a first pressure sensor CLS arranged near the outlet 7 of the control line CL and suitable for measuring a pressure in the control line CL, and a second pressure sensor SLS arranged near the outlet 8 of the supplementary control line SL and suitable for measuring a pressure in the supplementary control line SL.

Both sensors may be configured to be connected to the control unit to provide real-time pressure data in the braking system and allow the control unit to detect any malfunctions of the system by comparing the detected pressure data with information relating to the braking input imparted by the driver. The pressure sensors CLS, SLS allow correct modulation of the solenoid valve 1 so as to regulate the pressure of the control line CL to the expected level and/or allow the control unit to activate the hydraulic emergency solenoid valve 3 in the event of failure.

It is understood that the invention is not limited to the embodiments described and illustrated herein, which are to be considered as examples of implementation; the invention is instead susceptible to modifications relating to shape, dimensions and arrangement of parts, construction details and materials used.

## Claims

1. A control valve assembly (100) for a hydraulic brake system of a vehicle, particularly an agricultural vehicle connected to a trailer, wherein the valve assembly (100) comprises:
- a hydraulic control solenoid valve (1) and a hydraulic control valve (4), each hydraulically connectable to a pressure source (P) and a brake fluid reservoir (T) mounted on the agricultural vehicle, and each configured to receive a pressurized brake fluid from said pressure source (P);
- a hydraulic control line (CL) which hydraulically connects the hydraulic control solenoid valve (1) to at least one trailer brake;
- a supplementary hydraulic control line (SL) which hydraulically connects the hydraulic control valve (4) to at least one trailer brake;
**characterized in that**
the valve assembly (100) comprises a hydraulic emergency solenoid valve (3) on the supplementary control line (SL), interposed between the hydraulic control valve (4) and said at least one trailer brake,
said hydraulic emergency solenoid valve (3) is connectable with the reservoir (T) in such a way that when the hydraulic emergency solenoid valve (3) is activated, the pressure in the supplementary control line (SL) is reduced, activating the at least one trailer brake during an emergency braking.

2. A valve assembly (100) according to claim 1, wherein the control line (CL) and the supplementary control line (SL) are hydraulically separated from each other.

3. A valve assembly (100) according to claim 1 or 2, wherein the control line (CL) comprises a first pressure sensor (CLS) and the supplementary control line (SL) comprises a second pressure sensor (SLS) arranged for pressure measurement in the respective control line (CL, SL).

4. A valve assembly (100) according to claim 3, wherein the hydraulic emergency solenoid valve (3) is configured to be activated by an electronic control unit mounted on board the agricultural vehicle based on pressure information detected by pressure sensors (CLS, SLS).

5. A valve assembly (100) according to any one of the preceding claims, wherein the hydraulic emergency solenoid valve (3) is configured to selectively connect the supplementary control line (SL) with the hydraulic control valve (4) or the tank (T).

6. A valve assembly (100) according to any one of the preceding claims, comprising a mechanical hydraulic modulation valve (2) installed on the control line (CL) and interposed between the control solenoid valve (1) and said at least one trailer brake and hydraulically connected to the control solenoid valve (1) and said at least one brake.

7. A valve assembly (100) according to claim 6, wherein the mechanical modulation valve (2) is hydraulically controllable by the control solenoid valve (1) to regulate the flow passage in the control line (CL) to the brake.

8. A valve assembly (100) according to any one of the preceding claims, wherein the hydraulic control valve (4) is configured to be hydraulically controlled.

9. A valve assembly (100) according to any one of claims 1 to 7, wherein the hydraulic control valve (4) is configured to be mechanically controlled.

10. A hydraulic braking system (200) of a vehicle, particularly an agricultural vehicle connected to a trailer, wherein the braking system (200) comprises a valve assembly (100) according to any one of the preceding claims, connectable to a pressure source (P) and a brake fluid reservoir (T) mounted on the agricultural vehicle and arranged to control the braking of at least a trailer brake.
